# EUROPEAN PATENT SPECIFICATION

(11) **EP 1 042 956 B1**
(45) Date of publication and mention of the grant of the patent: **21.06.2006**
(21) Application number: 99201085.0
(22) Date of filing: 09.04.1999
(51) Int. Cl.: A21D 13/00

(54) **Raw topped pizza dough**
Roher belegter Pizzateig
Pâte crue de pizza garnie

(43) Date of publication of application: 11.10.2000
(73) Proprietor: SOCIETE DES PRODUITS NESTLE S.A., 1800 Vevey (CH)
(72) Inventor: Stokoe, Ian, 25438 Helsingborg (SE)
(74) Representative: Thomas, Alain

(56) References cited:
- EP-A- 0 672 349
- WO-A-96/11577
- CA-A- 2 148 038
- US-A- 4 401 681
- US-A- 4 693 899
- US-A- 4 774 095
- US-A- 5 059 433
- US-A- 5 368 877

## Description

The invention relates to a fresh topped pizza dough, and more specifically, to a topped, uncooked pizza having fresh appearance and enhanced storage properties under chilled conditions.

Commercially available chilled pizza dough products are generally wheat flour-based which are usually prepared by producing a suitable dough composition, forming it into the desired shape, applying a filling with sauce and topping onto the dough. The pizza dough is generally at least partially set by baking or frying the dough before packaging. Then, the pizza dough is stored at refrigerated temperature. Usually, the sauce and topping comprise moist material that tends to migrate to the dough during storage under chilled conditions rendering the dough soggy. As a consequence, the pizza dough so prepared generally shows very poor texture after re-baking in the oven for achieving the final cooking state. Solutions have been developed to protect the dough with moisture barrier at the interface between the dough and the sauce. However, these solutions are expensive and do not give satisfactory results.

The pre-baked pizza dough is also far from displaying a fresh appearance of a hand-made pizza. The properties of the bread deteriorate during storage. In particular, the bread tends to stale within a couple of days. The staling is due to retrogradation of the starch in the bread and gives hardness texture to the bread texture. The pre-baked pizza is also lengthier to produce, as a proofing stage is rendered necessary to allow the dough to lift so as to achieve a desired texture before packing. In addition, a baking step must also be carried out which is time and energy consuming.

US 5,441,751 relates to a precooked prepackaged pizza product which is stable for storage but experiences the aforementioned drawbacks.

The present invention aims to provide a solution of a fresh pizza with hand-made appearance and very satisfactory bread texture and mouthfeel after baking that is appropriate as home-made or home-delivered pizza. Another object is to propose a fresh pizza with the convenience of being premade and preferably ready-to-bake with a relatively long shelf life under refrigerated conditions.

It is also an object of the invention to provide a pizza dough product that can be produced in a cost effective and rapid manner while avoiding unnecessary industrial operations.

Accordingly, the invention provides a storage stable topped pizza dough capable of being kept stable under refrigeration comprising
a raw dough having a first water activity,
a sauce having a second water activity directly applied onto the raw dough,
wherein,
said first water activity and second water activity are set so that their values are equal or differ substantially by no more than 0.1,
wherein the water activity of the overall pizza dough is comprised in the range of 0.94 to 0.98 and
wherein the sauce comprises at least one humecting agent that acts to reduce the water activity of the sauce.

It has been surprisingly found that by closely matching the water activity of the dough and the sauce as defined above, the water transfer from the sauce to the dough was significantly reduced so as to lead to a pizza having the appearance of the hand-made pizza products while being capable of delivering a proper texture as perceived by the consumer after baking. According to the invention, the dough remains in a raw configuration, i.e., fresh and unbaked, which permits to maintain all the characteristics of freshness of the dough during storage as opposed to a pre-baked chilled pizza dough.

In a more refined embodiment of the invention, it is preferred that the first water activity and second water activity differ substantially no more than 0.04. Therefore, there is almost no water transfer possible between the sauce and the dough. The dough is also less affected by moisture that consequently results in a longer shelf life.

In a further preferred embodiment, the water activity value of the dough is comprised in the range of 0.90 to 1.0. More preferably, the water activity of the dough is comprised in the range of 0.94 to 0.98. At these given values, the raw dough has increased storage properties with compared to dough having a higher water activity level. Therefore, the use of preservatives can be advantageously avoided or at least greatly reduced. At the same time, the dough has still a very good texture as opposed to dough having a lower activity level.

In a further preferred embodiment, the water activity of the sauce is comprised in the range of 0.9 to 1.0. In an even more preferred, the water activity of the sauce is comprised in the range of 0.94 to 0.98. The water activity of the sauce is reduced compared to regular values generally found for a pizza sauce. The reason is mainly that the value has to be set so as to closely match the value of water activity of the dough to prevent the water transfers. However, the water activity is still sufficiently high to confer a pizza sauce that keeps its organoleptic properties.

The invention relates to dough capable of sustaining a leavened dough structure during storage so that upon baking the dough, the resulting baked product resembles a freshly prepared and baked pizza. For that, the dough preferably contains living yeast that advantageously participates to the continuous proofing of the dough during the storage period of the pizza dough. Under living yeast, we understand a yeast which is still living during the storage. The refrigeration is generally maintained at a temperature of 12°C or below, more particularly between 2 to 8°C. The possible storage of the present pizza dough is at least 7 days, more preferably 2 to 4 weeks without significant changes in the dough acidity, water activity and physico-chemical texture.

EP 487 878 and EP 672 349 give additional information on the dough including living yeast, the content of which is incorporated herein by reference. However, even if preferred, yeast could also be replaced by a baking chemical agent such as a mixture of a leavening acid and a leavening base.

It has been found that the water activity of the overall pizza product reaches a certain equilibrium level after a certain period of storage at chilled conditions. The period can vary from a few days to several weeks depending on the composition of the pizza, numerous physico-chemical parameters such as pH, water activity, temperature, etc. According to the invention, the water activity of the overall pizza is comprised in a range of 0.94 to 0.98, more preferably 0.96 which represents the optimal value where the pizza dough product can undergo a prolonged shelf life under refrigeration while still keeping high textural, culinary and baking properties.

In the present context, the water activity or a_{w} refers to the ratio between the partial vapour pressure of water at the surface of the sample and the vapour pressure of pure water at the same temperature. The a_{w} may however be determined indirectly by measuring the equilibrium relative humidity reached in a close chamber at constant temperature. To this end, a leak-tight container having thermostatically regulated chamber and an electronic humidity sensor is used, e.g., Novasina, Switzerland.

Suitable dough composition contains between 43 to 62% of flour, such as wheat flour, between 5 to 23% fat, between 0.01 and 2% yeast, between 1% and 2.5% of sodium chloride or sugar, and between 23 to 33% of water to reach the desired properties. Salt and sugar also serves the function of binding the water in the dough. A certain amount of sugar also participates to control the yeast growth so as to achieve the proofing of the dough in the packaging. The fat is a vegetable or animal fat, for example vegetable oil or margarine. The dough is prepared by mixing flour, a leavening agent such living yeast, water and the other ingredients until a proper texture is obtained. Then, the dough is extruded by dough extruder and sheeted to the desired thickeness. A laminate of thickeness comprised in a range of 1 to 4 mm is preferable. It is important to note that according to the invention, even at such low thickness, the dough will be able to withstand the contact of the sauce without risk of being moisturised to a soggy level. Then, the sheeted dough is cut out to the individual desired shapes. For example, flat round pieces of dough having a diameter of about 300 mm are portioned. The edges of the dough are preferably folded to reduce the dough size to about 295 mm. It has been found that the double-layered edges have a tendency to bake without drying out as compared to a single-layered edges.

The sauce of the pizza dough may preferably includes at least one humecting agent that acts to bind water, prevents its evaporation and thus reduce the water activity of the sauce. Suitable humecting agents are sodium chloride or other salts. Sodium chloride has the advantage that it is an economical way for reducing the water activity of the sauce and that, at the same time, is not consumed by yeast which would otherwise lead to rapid uncontrolled microbiological growth. In case poorly salted pizza products are desirable, salt can be replaced by other humecting agents such as carbohydrates. The carbohydrates are preferably chosen among those which are not easily metabolised by yeast contained in the dough so as to keep the yeast growth under control. Suitable carbohydrates are selected among sorbitol or maltodextrin or a mixture thereof. These carbohydrates have also the advantage of a relatively neutral taste. However, an amount of at least 10% by weight of these non-salted humecting agents is generally required for reaching a proper level of water activity reduction as previously defined. Non-salted are generally more expensive than salt but have the advantage to reduce the amount of salt to a minimum as desired.

The pizza dough of the invention relates to stored refrigerated products kept at temperatures comprised between about 0 to 8°C, preferably 3° to 6°C.

Preferably, the pizza dough further comprises cheese spread over the top of the pizza dough. It is also important to control the water activity of the cheese so that it also matches the water activity of the dough and sauce as well. For that, the cheese has preferably a water activity or a_{w} in a range of 0.90 to 0.99, preferably 0.93 to 0.97.

The pizza dough can also comprises various garnish or topping such as meat, vegetables, egg, fish crumbs, etc. The water activity of the garnish can be allowed to slightly vary in a range of 0.85 to 0.99 provided that the overall water activity at equilibrium remains in the given range.

In the context of the invention, "topped" pizza dough refers to an assembly of a fresh un-baked dough and at least a substantially liquid or viscous sauce such as tomato sauce or other types of sauce. The definition encompasses a semifinished pizza dough having only a dough and sauce with the possibility for the consumer to add garnish on it such as cheese, meat, vegetables, etc. but it also encompasses a ready-to-bake pizza with dough, sauce and garnish without need to add other ingredients.

The pizza dough can be contained within a package adapted for receiving the pizza dough in substantially airtight conditions under normal atmosphere.

In a preferred embodiment, the packaging assembly comprises a package such as a thermoformed tray sealed by a top web or a flow pack package. The package preferably contains valve means that allows gas (CO₂) generated by the dough during storage to escape when the inside pressure exceeds a certain minimum value.

The following examples are intended to illustrate the present invention.

### Example 1 - Dough preparation

A suitable amount of LTI yeast is mixed with 59% flour, 6% fat, 2% NaCl, 30% water, 1% of a volume enhancing agent such as ethanol (95% alcohol content in volume), 1% gluten (optional), 1% sugar (or other carbohydrates), emulsifiers, acid ascorbic and flavourings. After mixing, the dough is divided, laminated, sheeted, cut to form flat dough portions.

The a_{w} of the dough obtained is about 0.96.

### Example 2 - Sauce preparation

Tomato sauce is achieved by sautéing 7% by weight unblanched onion with 3.6% oil. 1% salt and 45.5% drained diced tomato are added. The mixture is cooked until its volume has been reduced by 26%. The reduction is done to reach the desired water content which is a factor in controlling the a_{w}. Reduction also develops flavour of the sauce. Remaining ingredients including 27% tomato purée added the reduced mass, 7.2% maltodextrin, 4.5% sorbitol, 3.6% starch and 0.5% spices are added and the mixture is reheated to 70°C. Starch acts as a thickening agent.

The final a_{w} is about 0.96.

### Example 3 - Final assembly

The chilled sauce is spread over the top of the pizza. The cheese is then added and finally the garnish. The following proportions are assembled as typical examples:
40-85% Dough, preferably 50%,
10-25% sauce, preferably 12%,
0-25% cheese, preferably 18%,
0-25% garnish, preferably 20%.

Garnish may comprise various ingredients depending upon the type of pizza which needs to be proposed. For example, typical garnish may include sliced ham, sausage, bacon, mushrooms, fresh, grilled or blanched vegetables, olives, tuna, meat such as turkey etc.

The filled pizza dough is then packed under modified atmosphere leaving a residual volume of oxygen preferably less than 1.5%. The dough is packed with a baking paper underneath and sealed in a special packaging comprising a large tray closed by a sealed foil with a one-way valve according to the technology disclosed in EP 672 349.

Once packed, the filled pizza dough is chilled between 3 to 8°C. If kept at this temperature, the product can have a storage life of up to 3-4 weeks. Under such conditions growth of normal spoilage micro-organisms, like lactic acid bacteria which give rise to non-desirable sensory characteristics, is properly controlled. Growth of Clostridium botulimum, a severe food poisoning micro-organism, is also inhibited which contributes to consumer safety.

### Example 4 - Pizza preparation

The pizza dough is separated from the packaging while the baking paper is kept in contact with the bottom of the dough. The pizza dough is placed on a baking tray and put into a cold or pre-heated oven. The pizza dough is heated for 15 to 25 minutes at about 200°C.

## Claims

1. A topped pizza dough capable of being kept stable under refrigeration comprising
a raw dough having a first water activity,
a sauce having a second water activity directly applied onto the raw dough,
wherein,
said first water activity and second water activity are set so that their values are equal or differ substantially by no more than 0-1,
wherein the water activity of the overall pizza dough is comprised in the range of 0.94 to 0.98 and
wherein the sauce comprises at least one humecting agent that acts to reduce the water activity of the sauce.

2. A topped pizza dough according to claim 1 wherein, the first water activity and second water activity differ substantially no more than 0.04.

3. A topped pizza dough according to claim 1 or 2 wherein, the water activity value of the dough is comprised in the range of 0.90 to 1.0.

4. A topped pizza dough according to claim 3, wherein the water activity value of the dough is comprised in the range of 0.94 to 0.98.

5. A topped pizza dough according to any of the preceding claims wherein the water activity of the sauce is comprised in the range of 0.9 to 1.0.

6. A topped pizza dough according to claim 5, wherein the water activity of the sauce is comprised in the range of 0.94 to 0.98.

7. A topped pizza dough according to any of claims 1 to 6, wherein the humecting agent is selected from the group consisting of sodium chloride, salt other than sodium chloride, or carbohydrates or combinations thereof.

8. A topped pizza dough according to claim 7, wherein the carbohydrates are chosen among sorbitol, maltodextrin or a combination thereof

9. A topped pizza dough according to any of the preceding claims wherein, it further comprises cheese having a water activity in a range off 0.90 to 0.99.

10. A topped pizza dough according to claim 9, wherein cheese has a water activity in a range of 0.93 to 0.97,

11. A topped pizza dough according to any of the preceding claims, wherein it further comprises garnish having a water activity in a range of 0.85 to 0.99.

12. A topped pizza dough according to any of the preceding claims, wherein it comprises the following ingredients in the following amount by weight of the total weight of pizza:
Raw dough 40 to 85% by weight,
Sauce 10 to 25% by weight,
Cheese 0 to 25% by weight,
Garnish 0 to 25% by weight.

13. A topped pizza dough according to any of the preceding claims, wherein the dough is laminated to a thickness in a range of 1 to 4 mm.

14. A topped pizza dough according to any of the preceding claims, wherein the dough comprises between 43 to 62% by weight of flour, between 5 to 23% by weight of fat, between 0.01 to 2.0% yeast, between 1.0% to 2.5% by weight of sodium chloride or sugar and between between 23 and 33% by weight of water.

## Patentansprüche

1. Belegter Pizzateig, der unter Kühlbedingungen stabil gehalten werden kann, der umfaßt
einen rohen Teig mit einer ersten Wasseraktivität,
eine Sauce mit einer zweiten Wasseraktivität, die direkt auf den rohen Teig aufgebracht ist, wobei
die erste Wasseraktivität und die zweite Wasseraktivität so eingestellt sind, dass ihre Werte gleich sind oder sich im wesentlichen um nicht mehr als 0,1 unterscheiden,
wobei die Wasseraktivität des gesamten Pizzateigs im Bereich von 0,94 bis 0,98 liegt und
wobei die Sauce wenigstens ein Feuchthaltemittel aufweist, das im Sinne einer Verminderung der Wasseraktivität der Sauce wirkt.

2. Belegter Pizzateig nach Anspruch 1, wobei die erste Wasseraktivität und die zweite Wasseraktivität sich im wesentlichen um nicht mehr als 0,04 unterscheiden.

3. Belegter Pizzateig nach Anspruch 1 oder 2, wobei der Wasseraktivitätswert des Teigs im Bereich von 0,90 bis 1,0 liegt.

4. Belegter Pizzateig nach Anspruch 3, wobei der Wasseraktivitätswert des Teigs im Bereich von 0,94 bis 0,98 liegt.

5. Belegter Pizzateig nach irgendeinem der vorausgehenden Ansprüche, wobei die Wasseraktivität der Sauce im Bereich von 0,9 bis 1,0 liegt.

6. Belegter Pizzateig nach Anspruch 5, wobei die Wasseraktivität der Sauce im Bereich von 0,94 bis 0,98 liegt.

7. Belegter Pizzateig nach irgendeinem der Ansprüche 1 bis 6, wobei das Feuchthaltemittel ausgewählt ist aus der Gruppe, die besteht aus Natriumchlorid, einem anderen Salz als Natriumchlorid oder Kohlenhydraten oder Kombinationen davon.

8. Belegter Pizzateig nach Anspruch 7, wobei die Kohlenhyrate ausgewählt sind aus Sorbit, Maltodextrin oder einer Kombination davon.

9. Belegter Pizzateig nach irgendeinem der vorausgehenden Ansprüche, wobei dieser außerdem Käse mit einer Wasseraktivität in einem Bereich von 0,90 bis 0,99 aufweist.

10. Belegter Pizzateig nach Anspruch 9, wobei der Käse eine Wasseraktivität in einem Bereich von 0,93 bis 0,97 aufweist.

11. Belegter Pizzateig nach irgendeinem der vorausgehenden Ansprüche, wobei dieser außerdem eine Garnierung mit einer Wasseraktivität in einem Bereich von 0,85 bis 0,99 aufweist.

12. Belegter Pizzateig nach irgendeinem der vorausgehenden Ansprüche, wobei dieser die folgenden Zutaten in den folgenden Gewichtsmengen bezogen auf das Gesamtgewicht der Pizza aufweist:
Roher Teig 40 bis 85 Gew.-%,
Sauce 10 bis 25 Gew.-%,
Käse 0 bis 25 Gew.-%,
Garnierung 0 bis 25 Gew.-%.

13. Belegter Pizzateig nach irgendeinem der vorausgehenden Ansprüche, wobei der Teig zu einer Schicht von einer Dicke in einem Bereich von 1 bis 4 mm ausgeformt ist.

14. Belegter Pizzateig nach irgendeinem der vorausgehenden Ansprüche, wobei der Teig zwischen 43 und 62 Gew.-% Mehl, zwischen 5 bis 23 Gew.-% Fett, zwischen 0,01 bis 2,0 Gew.-% Hefe, zwischen 1,0 bis 2,5 Gew.-% Natriumchlorid oder Zucker und zwischen 23 und 33 Gew.-% Wasser aufweist.

## Revendications

1. Pâte à pizza garnie capable de rester stable dans des conditions de réfrigération, comprenant :
une pâte crue ayant une première activité d'eau,
une sauce ayant une deuxième activité d'eau appliquée directement sur la pâte crue,
où,
ladite première activité d'eau et ladite deuxième activité d'eau sont fixées de manière que leurs valeurs soient égales ou diffèrent sensiblement de 0,1 au plus,
l'activité d'eau de la pâte à pizza globale étant comprise dans la plage de 0,94 à 0,98 et
la sauce comprenant au moins un agent humectant qui sert à diminuer l'activité d'eau de la sauce.

2. Pâte à pizza garnie selon la revendication 1, dans laquelle la première activité d'eau et la deuxième activité d'eau diffèrent sensiblement de 0,04 au plus.

3. Pâte à pizza garnie selon la revendication 1 ou 2, dans laquelle la valeur de l'activité d'eau de la pâte est comprise dans la plage de 0,90 à 1,0.

4. Pâte à pizza garnie selon la revendication 3, dans laquelle la valeur de l'activité d'eau de la pâte est comprise dans la plage de 0,94 à 0,98.

5. Pâte à pizza garnie selon l'une quelconque des revendications précédentes, dans laquelle l'activité d'eau de la sauce est comprise dans la plage de 0,9 à 1,0.

6. Pâte à pizza garnie selon la revendication 5 dans laquelle l'activité d'eau de la sauce est comprise dans la plage de 0,94 à 0,98.

7. Pâte à pizza garnie selon l'une quelconque des revendications 1 à 6, dans laquelle l'agent humectant est sélectionné dans le groupe consistant en chlorure de sodium, sel autre que chlorure de sodium, ou glucides ou combinaisons de ceux-ci.

8. Pâte à pizza garnie selon la revendication 7, dans laquelle les glucides sont sélectionnés parmi le sorbitol, la maltodextrine ou une combinaison de ceux-ci.

9. Pâte à pizza garnie selon l'une quelconque des revendications précédentes, comprenant, en outre, du fromage ayant une activité d'eau dans une plage de 0,90 à 0,99.

10. Pâte à pizza garnie selon la revendication 9, dans laquelle le fromage a une activité d'eau dans une plage de 0,93 à 0,97.

11. Pâte à pizza garnie selon l'une quelconque des revendications précédentes, comprenant, en outre, une garniture ayant une activité d'eau dans une plage de 0,85 à 0,99.

12. Pâte à pizza garnie selon l'une quelconque des revendications précédentes, comprenant les ingrédients suivants en la quantité suivante en poids du poids total de pizza :
Pâte crue : 40 à 85 % en poids,
Sauce : 10 à 25 % en poids,
Fromage : 0 à 25 % en poids,
Garniture : 0 à 25 % en poids.

13. Pâte à pizza garnie selon l'une quelconque des revendications précédentes, dans laquelle la pâte est laminée jusqu'à une épaisseur dans une plage de 1 à 4 mm.

14. Pâte à pizza garnie selon l'une quelconque des revendications précédentes, dans laquelle la pâte comprend entre 43 et 62 % en poids de farine, entre 5 et 23 % en poids de matière grasse, entre 0,01 et 2,0 % de levure, entre 1,0 % et 2,5 % en poids de chlorure de sodium ou de sucre et entre 23 et 33 % en poids d'eau.
